# EUROPEAN PATENT APPLICATION

(11) **EP 4 651 559 A1**
(43) Date of publication of application: **19.11.2025**
(21) Application number: 23915273.9
(22) Date of filing: 09.01.2023
(51) Int. Cl.: H04W 28/24

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Gunzelmann, Rainer
(86) International application number: PCT/CN2023/071460
(87) International publication number: WO 2024/148494

(57) **Abstract**

Embodiments of the present invention provide an information processing method and apparatus, a communication device, and a storage medium. The information processing method is executed by a first network function node, and comprises: receiving an association identifier sent by a second network function node, wherein the association identifier is used for determining an UL stream and a DL stream that are associated with each other; and when a first delay of the UL stream and a first delay of the DL stream associated with the UL stream meet a trigger condition, sending a monitoring report to a third network function node, wherein the monitoring report is used for triggering the update of policy rules for a corresponding data stream.

## Description

### TECHNICAL FIELD

The invention relates to a field of wireless communication technologies, but is not limited to the field of wireless communication technologies, in particular to a method for processing information, an apparatus for information processing, a communication device and a storage medium.

### BACKGROUND

Mobile media services, extended reality (XR) services such as cloud augment reality (AR) or virtual reality (VR), cloud gaming, video-based machine or drone remote control or the like are expected to contribute an increasing traffic to a fifth-generation (5G) mobile communication network. For example, the XR service involves a multimodal data flow. The multimodal data flow may include: an audio data flow, a video data flow, biometric data and/or a tactile data flow.

These data flows may come from the same equipment or different equipments, or from the same application or different applications.

Generally, when there are multiple data flows associated with the multimodal data flow, certain latency requirements need to be satisfied to ensure a quality of multimodal data transmission and user experience.

### SUMMARY

The embodiments of the invention provide a method for processing information, an apparatus for information processing, a communication device and a storage medium.

According to a first aspect of embodiments of the invention, a method for processing information is provided. The method is performed by a first network function node, and includes:
receiving an association identifier (ID) sent by a second network function node, in which the association ID is configured to determine an uplink (UL) flow and a downlink (DL) flow associated with each other; and
when a first latency of the UL flow and a first latency of the DL flow associated with the UL flow meet a trigger condition, sending a monitoring report to a third network function node.

According to a second aspect of embodiments of the invention, a method for processing information is provided. The method is performed by a fourth network function node, and includes:
sending an association ID to a fifth network function node, in which the association ID is configured to determine an UL flow and a DL flow associated with each other;
in which after the fifth network function node sends the association ID to a first network function node, the association ID is used for the first network function node to send a monitoring report to a second network function node when a first latency of the UL flow and a first latency of the DL flow associated with the uplink flow meet a trigger condition.

According to a third aspect of embodiments of the invention, a method for processing information is provided. The method is performed by a fifth network function node, and includes:
receiving an association ID sent by a fourth network function node, in which the association ID is configured to determine an uplink flow and a downlink flow associated with each other; and
sending the association ID to a first network function node, in which the association ID is used for the first network function node to send a monitoring report to a second network function node when it is monitored that a first latency of the UL flow associated with the association ID and a first latency of the DL flow associated with the association ID meet a trigger condition.

According to a fourth aspect of embodiments of the invention, a method for processing information is provided. The method is performed by a sixth network function node, and includes:
receiving a monitoring report generated based on an association ID, in which the monitoring report is generated by a first network function node when a first latency of an UL flow and a first latency of a DL flow associated with the uplink flow by the association ID meet a trigger condition; and
sending indication information to a fifth network function node according to the monitoring report, in which the indication information indicates whether to update a policy charging control (PCC) rule of the associated UL flow and a PCC rule of the associated DL flow.

According to a fifth aspect of embodiments of the invention, an apparatus for information processing is provided. The apparatus includes:
a receiving module, configured to receive an association ID sent by a second network function node, in which the association ID is configured to determine an uplink flow and a downlink flow associated with each other; and
a sending module, configured to, when a first latency of the UL flow and a first latency of the DL flow associated with the UL flow meet a trigger condition, send a monitoring report to a third network function node.

According to a sixth aspect of embodiments of the invention, an apparatus for information processing is provided. The apparatus includes:
a sending module, configured to send an association ID to a fifth network function node, in which the association ID is configured to determine an uplink flow and a downlink flow associated with each other;
in which after the fifth network function node sends the association ID to a first network function node, the association ID is used for the first network function node to send a monitoring report to a second network function node when it is monitored that a first latency of the UL flow and a first latency of the DL flow associated with the uplink flow meet a trigger condition.

According to a seventh aspect of embodiments of the invention, an apparatus for information processing is provided. The apparatus includes:
a receiving module, configured to receive an association ID sent by a fourth network function node, in which the association ID is configured to determine an uplink flow and a downlink flow associated with each other; and
a sending module, configured to send the association ID to a first network function node, in which the association ID is used for the first network function node to send a monitoring report to a second network function node when it is monitored that a first latency of the UL flow associated with the association ID and a first latency of the DL flow associated with the association ID meet a trigger condition.

According to an eighth aspect of embodiments of the invention, an apparatus for information processing is provided. The apparatus includes:
a receiving module, configured to receive a monitoring report generated based on an association ID, in which the monitoring report is generated by a first network function node when a first latency of an uplink flow and a first latency of a downlink flow associated with the uplink flow by the association ID meet a trigger condition; and
a sending module, configured to send indication information to a fifth network function node according to the monitoring report, in which the indication information indicates whether to update a PCC rule of the associated UL flow and a PCC rule of the associated DL flow.

According to a ninth aspect of embodiments of the invention, a communication device is provided. The communication device includes: a processor, a transceiver, a memory and an executable program stored on the memory and capable of being run by the processor. The processor runs the executable program to perform the method described in the technical solution of any one of the first to fourth aspects when running the executable program.

According to a tenth aspect of embodiments of the invention, a computer storage medium is provided. The computer storage medium stores an executable program. When the executable program is executed by a processor, the method described in the technical solution of any one of the first to fourth aspects is implemented.

According to an eleventh aspect of embodiments of the invention, a communication system is provided. The communication system includes: a first network function node, a second network function node, a third network function node, a fourth network function node, a fifth network function node and a sixth network function node.

The first network function node is configured to execute the method for processing information provided by any technical solution of the first aspect.

The fourth network function node is configured to execute the method for processing information provided by any technical solution of the second aspect.

The fifth network function node is configured to execute the method for processing information provided by any technical solution of the third aspect.

The sixth network function node is configured to execute the method for processing information provided by any technical solution of the fourth aspect.

The first network function node in the embodiment of the invention is capable of receiving an association ID. When the first network function node monitors a latency of one of an UL flow and a DL flow associated with each other, it can find the other flow according to the association ID and determine its latency. When the first latency of the UL flow and the first latency of the DL flow meet a trigger condition, the first network function node sends a monitoring report to the third network function node. As such, the monitoring report is used for a policy control function (PCF) to adaptively implement a PCC rule, so that the current PCC rule is applicable to a case that a sum of actual latencies of the UL flow and the DL flow is less than or equal to a round trip (RT) latency, thereby improving a RT quality of service (QoS).

It should be understood that the above general description and the following detailed descriptions are exemplary and explanatory only and do not limit the embodiments of the invention.

### BRIEF DESCRIPTION OF THE DRAWINGS

The accompanying drawings, which are incorporated in and constitute a part of the specification, illustrate embodiments consistent with the invention and together with the specification serve to explain the principles of the embodiments of the invention.
FIG. 1 is a structural schematic diagram of a wireless communication system according to an example embodiment.
FIG. 2A is a flowchart of a method for processing information according to an example embodiment.
FIG. 2B is a flowchart of a method for processing information according to an example embodiment.
FIG. 2C is a flowchart of a method for processing information according to an example embodiment.
FIG. 3A is a flowchart of a method for processing information according to an example embodiment.
FIG. 3B is a flowchart of a method for processing information according to an example embodiment.
FIG. 4 is a flowchart of a method for processing information according to an example embodiment.
FIG. 5 is a flowchart of a method for processing information according to an example embodiment.
FIG. 6 is a flowchart of a method for processing information according to an example embodiment.
FIG. 7 is a flowchart of a method for processing information according to an example embodiment.
FIG. 8 is a structural schematic diagram of an apparatus for information processing according to an example embodiment.
FIG. 9 is a structural schematic diagram of an apparatus for information processing according to an example embodiment.
FIG. 10 is a structural schematic diagram of an apparatus for information processing according to an example embodiment.
FIG. 11 is a structural schematic diagram of a user equipment (UE) according to an example embodiment.
FIG. 12 is a structural schematic diagram of a network function node according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the embodiments of the invention. Instead, they are merely examples of apparatuses and methods consistent with aspects related to the embodiments of the invention.

The terms used in the embodiments of the invention are only for the purpose of describing specific embodiments, and are not intended to limit the embodiments of the invention. The singular forms of "a" and "the" used in the invention are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the invention to describe various information, the information should not be limited to these terms. These terms are only used to distinguish the same type of information from each other. For example, without departing from the scope of the embodiments of the invention, the first information may also be referred to as the second information, and similarly, the second information may also be referred to as the first information. Depending on the context, the term "if" as used herein may be interpreted as "when", "while" or "in response to determining".

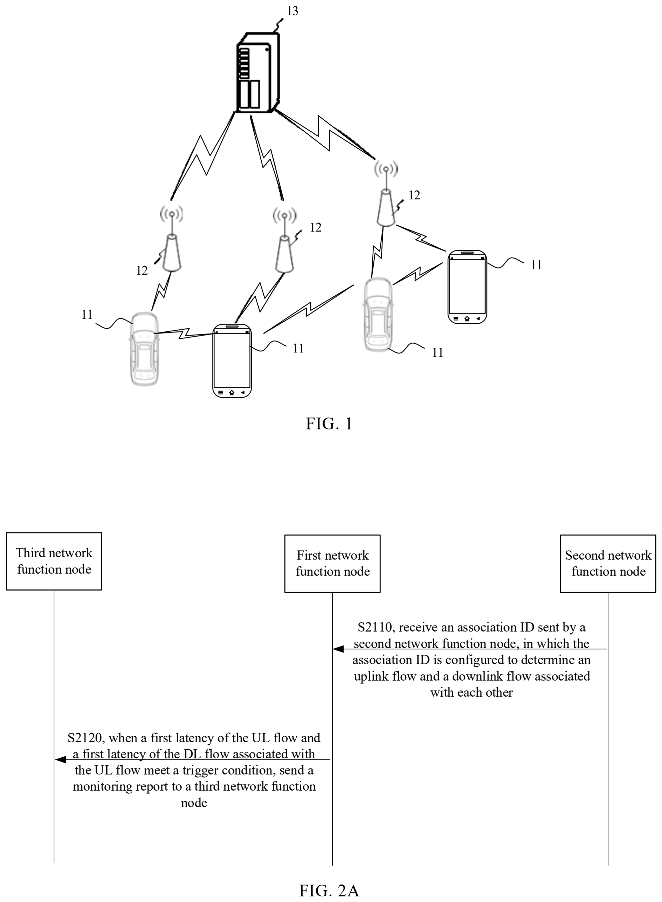

FIG. 1 is a structural schematic diagram of a wireless communication system according to an embodiment of the invention. As illustrated in FIG. 1, the wireless communication system is a communication system based on cellular mobile communication technology. The wireless communication system may include: several UEs 11 and several access network function nodes 12. In some embodiments, the wireless communication system may also include one or more core network function nodes 13.

The UE 11 may be a device that provides voice and/or data connectivity to a user. The UE 11 may communicate with one or more core networks via a radio access network (RAN). The UE 11 may be an Internet of Things (IoT) UE, such as a sensor device, a cell phone (or "cellular" phone), and a computer with the IoT UE, for example, a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Alternatively, the UE 11 may also be an unmanned aerial vehicle device. Alternatively, the UE 11 may also be an in-vehicle device, for example, a driving computer having wireless communication function or a wireless communication device external to the driving computer. Alternatively, the UE 11 may also be a roadside device, for example, a street light, a signal light, or other roadside devices having the wireless communication function.

The access network function node 12 may be a network side device in the wireless communication system. The wireless communication system may be a 4th Generation (4G) mobile communication system, also known as a Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called a New Generation-Radio Access Network (NG-RAN) or a machine type communication (MTC) system.

The access network function node 12 may be an evolved access device (eNB) employed in the 4G system. Or, the access network function node 12 may be an access network function node (gNB) with a centralized distributed architecture employed in the 5G system. When the access network function node 12 adopts a centralized-distributed architecture, it usually includes a central unit (CU) and at least two distributed units (DUs). The CU is equipped with protocol stacks of a Packet Data Convergence Protocol (PDCP) layer, a Radio Link Control (RLC) layer and a Media Access Control (MAC) layer. The DU is equipped with a protocol stack of a physical (PHY) layer, and the specific implementation of the access network function node 12 is not limited in the embodiment of the invention.

A wireless connection may be established between the access network function node 12 and the UE 11 via a wireless radio interface. In different implementations, the wireless radio interface is a wireless radio interface based on the 4G standard. Alternatively, the wireless radio interface is a wireless radio interface based on the 5G standard, such as a NR. Or, the wireless radio interface may be a wireless radio interface based on the standard of the next generation of 5G.

The core network function node includes but is not limited to: a User Plane Function (UPF), a Session Management Function (SMF), a Policy Control Function (PCF), a Network Exposure Function (NEF), and an Application Function (AF). The UPF may be used for user plane functions and may be used for monitoring user plane data flows and other processes. The SMF may be used for session management, etc. The PCF may be used for generating and updating policies. The NEF may be used to connect network function nodes inside a mobile communication network to network function nodes outside the mobile communication network. The AF may perform application layer management of data flows for application functions.

As illustrated in FIG. 2A, the embodiment of the invention provides a method for processing information. The method is performed by a first network function node, and includes the following steps.

Step S2110: receiving an association ID sent by a second network function node, in which the association ID is configured to determine an uplink flow and a downlink flow associated with each other.

Step S2120: when a first latency of the uplink flow and a first latency of the downlink flow associated with the uplink flow meet a trigger condition, sending a monitoring report to a third network function node.

The first network function node may be capable of monitoring information such as a transmission delay of data flow. For example, the first network function node may be an access network node and/or a core network node. The access network node includes but is not limited to an eNB and/or a gNB. The core network node includes but is not limited to a UPF.

The second network function node may be an SMF.

The UL flow may be called UL data traffic, and the DL flow may be called DL data traffic.

For example, the UL flow may include a Service Data Flow (SDF) and/or a Quality of Service (QoS) flow.

Generally, the UL flow may be: a data flow sent by a UE to a network device, such as a data flow sent by the UE to an AF or an application server.

Generally, the DL flow may be: a data flow sent by an AF and/or an application server.

The association ID is capable of associating an UL flow and a DL flow of the same/common RT latency. Alternatively, the association ID is used to associate any UL flow and DL flow belonging to the same RT data traffic. In this case, after receiving the association ID, the first network function node is able to determine the UL flow and DL flow associated with each other according to the association ID. That is, the association ID may be used for the first network function node to determine the UL flow and the DL flow that are in an association relationship. This association relationship may include sharing a RT latency.

For example, the association ID includes, but is not limited to, at least one of the following:
a peer ID, which is used to identify an UL flow and a DL flow sharing a common RT latency;
a RT group ID, which is used to identify a RT group, and the RT group may include one or more UL flows and one or more DL flows;
a peer indication, including flow description(s), which may be used to determine the UL flow and the DL flow sharing the common RT latency; or
common ID information, which is used to indicate a pair of RT data flows and is generated or mapped based on common ID information sent by an AF. For example, the mobile communication network generates internal common ID information within itself based on external common ID information provided by the AF. The internal common ID information may be used in a mobile communication network having an access network and a core network.

In an embodiment, the association ID may also associate PCC rules and/or QoS IDs of an UL flow and/or its associated DL flow. The QoS ID at least includes a 5G QoS ID (5QI).

For example, the association ID may be used to associate the PCC rule of the UL flow with the PCC rule of the DL flow associated with the UL flow. As another example, the association ID may be used to associate the 5QI of the UL flow with the 5QI of the DL flow associated with the UL flow.

There are various ways to associate the association ID with flow IDs of the UL flow and the DL flow, including but not limited to: storing the association ID and the flow ID of the UL flow correspondingly or transmitting them together; storing the association ID and the flow ID of the DL flow correspondingly or transmitting them together; or storing the association ID, the flow ID of the UL flow and the flow ID of the DL flow correspondingly or transmitting them together.

There are various ways to associate the association ID with the PCC rule, including but not limited to: containing the association ID in the PCC rule; not containing the association ID in the PCC rule but carrying it in a message containing the PCC rule; or storing the association ID and a rule ID of the PCC rule correspondingly or transmitting them together. For example, the association ID and the PCC rule of the UL flow are stored correspondingly or transmitted together. Alternatively, the association ID and the PCC rule of the DL flow are stored correspondingly or transmitted together. Alternatively, the association ID, the PCC rule of the DL flow and the PCC rule of the UL flow are stored correspondingly or transmitted together.

There are various ways to associate the association ID with the 5QI, including but not limited to: including the association ID in the 5QI; not including the association ID in the 5QI but carrying it in a message containing the 5QI; or storing the association ID and a rule ID of the 5QI correspondingly or transmitting them together. For example, the association ID and the 5QI of the UL flow are stored correspondingly or transmitted together. Alternatively, the association ID and the 5QI of the DL flow are stored correspondingly or transmitted together. Alternatively, the association ID, the 5QI of the DL flow and the 5QI of the UL flow are stored correspondingly or transmitted together.

After receiving the sent association ID, the first network function node may determine the UL flow and the DL flow that are in the association relationship, and determine whether the trigger condition to send the monitoring report is met according to monitoring results of the UL flow and the DL flow in a comprehensive manner.

The association ID is applicable for various service types. For example, a service corresponding to the association ID may be a multimodal service, and service data of the multimodal service may be called multimodal data. Multimodal data is data input by the same device or different devices (including sensors) for describing the same service or application. The data may be output to one or more target devices/terminals. Each data flow in the multimodal data often has a certain or even strong correlation, such as synchronization of audio and video flows, synchronization of touch and vision, etc. There are some common characteristics in the data flows of this kind of media services, between data flows or in network transmission requirements of these SDFs. Effective identification and utilization of these characteristics will be more conducive to transmission and control of networks and services, as well as to service security and user experience.

XR management (XRM) services require a 5G system (5GS) to comprehensively consider the QoS characteristics of relevant service data flows, for example, whether parameters of a data flow such as a delay critical GBR, a Guaranteed Flow Bit Rate (GFBR), a Packet Delay Budget (PDB) and a Default Maximum Data Burst Volume (MDBV) can all be met and coordinated at the same time. It involves multiple XRM data flows of a UE and XRM data flows of multiple UEs, and the consistency of QoS authorization and execution between them is guaranteed. UL-DL transmission coordination to meet RT latency requirements is a key issue in the research of 5GS XRM service.

In the embodiment of the invention, the first latency of the UL flow and the first latency of the DL flow are monitored independently. For example, after the first latency of the UL flow is monitored, the DL flow corresponding to the UL flow is determined according to the association ID, and the first latency of the DL flow is further determined. It is determined whether a trigger event of a monitoring report is met in combination with the first latency of the UL flow and the first latency of the DL flow. As another example, after the first latency of the DL flow is monitored, the UL flow corresponding to the DL flow is determined according to the association ID, and the first latency of the DL flow is further determined, so that whether the trigger event of the monitoring report is met can be determined in combination with the first latency of the UL flow and the first latency of the DL flow.

For example, the monitoring report may be a QoS monitoring report. In an embodiment, when a trigger condition is met, sending the monitoring report to the second network function node includes one of the following:
when the trigger condition is met, sending a monitoring report of the UL flow to the second network function node, in which the monitoring report includes: monitoring result information of the UL flow; and
when the trigger condition is met, sending a monitoring report of the DL flow to the second network function node, in which the monitoring report includes: monitoring result information of the DL flow.

For example, the monitoring result information includes at least one of the following:
a first indication, which indicates that an actual latency of the UL flow or the DL flow is greater than an authorized latency of the PCC rule;
a second indication, which indicates that an actual latency of the UL flow or the DL flow is less than an authorized latency of the PCC rule;
actual latency information, which indicates the actual latency of the UL flow or the DL flow; or
latency difference information, which indicates a difference value between the actual latency of the UL flow and the authorized latency, or a difference value between the actual latency of the DL flow and the authorized latency.

For example, the authorized latency may be a PDB or a Packet Set Delay Budget (PSDB) determined according to the PCC rule.

In an embodiment, the monitoring result information at least includes the actual latency information, and other optional information.

After receiving the sent monitoring report, it is convenient for the second network function node or the third network function node to adjust the PCC rules of the UL flow and the DL flow in a timely manner according to the monitoring report, to enable the UL flow and the DL flow of the common RT latency to meet the requirements of RT latency as a whole, thereby improving the QoS.

For example, the association ID may be generated by a core network function node, such as a PCF of the core network.

According to the association ID, a sum of the authorized delay of the UL flow and the authorized delay of the DL flow will be less than or equal to the RT latency.

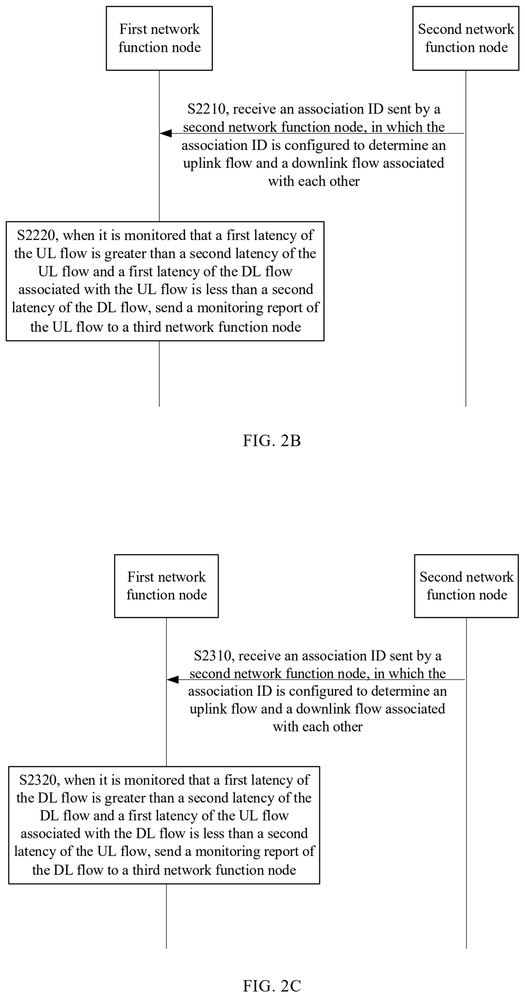

As illustrated in FIG. 2B, the embodiment of the invention provide a method for processing information. The method is performed by a first network function node, and includes the following steps.

Sep S2210: receiving an association ID sent by a second network function node is received, in which the association ID is configured to determine an uplink flow and a downlink flow associated with each other.

Step S2220: when it is monitored that a first latency of the UL flow is greater than a second latency of the UL flow and a first latency of the DL flow associated with the UL flow is less than a second latency of the DL flow, sending a monitoring report of the UL flow to a third network function node.

The second latency of the UL flow is a latency authorized by the current PCC rule of the UL flow.

The second latency of the DL flow is a latency authorized by the current PCC rule of the DL flow.

For example, the first network function node monitors the latency of the UL flow and the latency of the DL flow separately, that is, the UL flow and the DL flow are being monitored independently. When it is monitored that the first latency of the UL flow is greater than the second latency of the UL flow, the first network function node determines the DL flow associated with the UL flow according to the association ID, and then determines the latency of the DL flow. It is determined whether a relationship between the actual latency and the authorized latency of the DL flow associated with the UL flow is opposite to that of the UL flow, if so, the first network function node sends the monitoring report of the UL flow, otherwise, the first network function node suspends the sending or even does not send the monitoring report.

After receiving the sent monitoring report of the UL flow, it is convenient for the PCF to adjust the PCC rule of at least one of the UL flow or the DL flow, so that a sum of latencies of the UL flow and the DL flow is less than or equal to the common RT latency corresponding to the UL flow and the DL flow.

As illustrated in FIG. 2C, the embodiment of the invention provides a method for processing information. The method is performed by a first network function node, and includes the following steps.

Sep S2310: receiving an association ID sent by a second network function node, in which the association ID is configured to determine an uplink flow and a downlink flow associated with each other.

Step S2320: when it is monitored that a first latency of the DL flow is greater than a second latency of the DL flow and a first latency of the UL flow associated with the DL flow is less than a second latency of the UL flow, sending a monitoring report of the DL flow to a third network function node.

After receiving the sent monitoring report, it is convenient for the PCF to update the PCC rule of at least one of the UL flow or the associated DL flow, to enable the UL flow and the associated DL flow to meet the requirements of RT latency, thereby ensuring the QoS of the UL flow and the DL flow that are in the association relationship.

The second latency of the UL flow is a latency authorized by the current PCC rule of the UL flow.

The second latency of the DL flow is a latency authorized by the current PCC rule of the DL flow.

For example, the first network function node monitors the latency of the UL flow and the latency of the DL flow separately, that is, the UL flow and the DL flow are being monitored independently. When it is monitored that the first latency of the DL flow is less than the second latency of the DL flow or the first latency of the DL flow is greater than the second latency of the DL flow, the first network function node determines the UL flow associated with the DL flow according to the association ID, and then determines the latency of the UL flow. It is determined whether a relationship between the actual latency and the authorized latency of the UL flow associated with the DL flow is opposite to that of the DL flow, if so, the first network function node sends the monitoring report of the DL flow, otherwise, the first network function node suspends the sending or even does not send the monitoring report.

After receiving the sent monitoring report of the UL flow, it is convenient for the PCF to adjust the PCC rule of at least one of the UL flow or the DL flow, so that a sum of latencies of the UL flow and the DL flow is less than or equal to the common RT latency corresponding to the UL flow and the DL flow.

In conclusion, the associated UL flow and DL flow has a common RT latency. If the actual latency of the UL flow is greater than its authorized latency and the actual latency of the DL flow is less than its authorized latency, miss detection or repeated detection of flow when the network function node independently monitors a flow with an actual latency that is too large may be reduced by updating the PCC rule, and one of the PCC rules of the UL and DL flows that have a common RT latency is adjusted to reduce the phenomenon of miss detection or repeated detection of flow.

In some embodiments, the monitoring report is used to update the PCC rule of at least one of the associated UL flow or the DL flow. That is, after sending at least one of the monitoring report of the UL flow or the monitoring report of the DL flow to the PCF, the PCF updates the PCC rule of at least one of the UL flow or the DL flow.

In some embodiments, the first network function node is an RAN node, and the third network function node is a UPF or a PCF.

For example, if the first network function node is an RAN node, such as a base station, the base station sends the monitoring report to the UPF and then the UPF sends it to the PCF through an SMF, or the base station directly sends the monitoring report to the PCF. Alternatively, the access network node sends the monitoring report to the UPF, and then the UPF sends it to an AF. The PCF may decide whether to update the PCC rule by itself after receiving the monitoring report, or it may send the monitoring report to the AF for the AF to decide whether to update the PCC rule of at least one of the associated UL flow or the DL flow.

For example, the first network function node is a UPF, and the third network function node is a PCF or an AF. Alternatively, if the first network function node is a UPF, the UPF may directly send the monitoring report to the AF over a user plane, or the UPF may directly or indirectly send the monitoring report to the PCF over a control plane.

Based on any of the above technical solutions, the first network function node is an RAN node, and the second network function node is an SMF or a UPF. Or, the first network function node is a UPF and the second network function node is an SMF.

For example, the UL flow is a UL SDF corresponding to a RT latency, and the DL flow is a DL SDF corresponding to the RT latency.

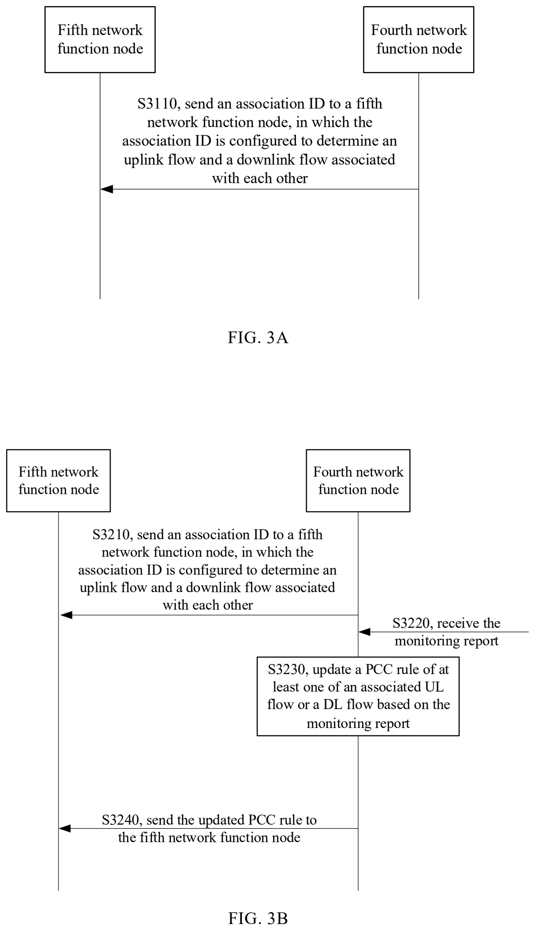

As illustrated in FIG. 3A, the embodiment of the invention provides a method for processing information. The method is performed by a fourth network function node, and includes the following steps.

Step S3110: sending an association ID is sent to a fifth network function node, in which the association ID is configured to determine an uplink flow and a downlink flow associated with each other.

After the association ID is sent to the first network function node by the fifth network function node, it is used for the first network function node to send a monitoring report to a second network function node when it is monitored that a first latency of the UL flow and a first latency of the DL flow associated with the association ID meet a trigger condition.

In the embodiment of the invention, the fourth network function node and the fifth function node both are core network function nodes. For example, the fourth network function node may be a PCF, and the fifth network function node may be an SMF.

After the PCF sends an associated node to the SMF, the SMF sends the association ID to the first network function node (that is, the SMF sends the association ID to a UPF or an RAN node), so that the first network function node can determine the associated UL flow and DL flow according to the association ID.

The UL flow may be called UL data traffic, and the DL flow may be called DL data traffic.

For example, the UL flow may include a SDF and/or a Quality of Service (QoS) flow.

Generally, the UL flow may be: a data flow sent by a UE to a network device, such as a data flow sent by the UE to an AF or an application server.

Generally, the DL flow may be: a data flow sent by an AF and/or an application server.

The association ID is capable of associating an UL flow and a DL flow of the same/ common RT latency. Or, the association ID is used to associate any UL flow and DL flow belonging to the same RT data traffic. In this case, after receiving the association ID, the first network function node is able to determine the associated UL flow and DL flow according to the association ID. That is, the association ID may also be used for the first network function node to determine the UL flow and the DL flow that are in an association relationship. This association relationship may include sharing a common RT latency.

In an embodiment, the fourth network function node is a PCF; and/or the fifth network function node is an SMF; and/or the first network function node is an RAN node; and/or the first network function node is a UPF.

As illustrated in FIG. 3B, the embodiment of the invention provides a method for processing information. The method is performed by a fourth network function node, and includes the following steps.

Step S3210: sending an association ID to a fifth network function node, in which the association ID is configured to determine an uplink flow and a downlink flow associated with each other; in which after the fifth network function node sends the association ID to a first network function node, the association ID is used for the first network function node to send a monitoring report to a second network function node when it is monitored that a first latency of the UL flow and a first latency of the DL flow associated with the association ID meet a trigger condition.

Step S3220: receiving the monitoring report.

Step S3230: updating a PCC rule of the associated UL flow and/or the associated DL flow based on the monitoring report.

Step S3240: sending the updated PCC rule to the fifth network function node.

The monitoring report is generated by the first network function node. The monitoring report is sent by the first network function node to the fifth network node, and then sent by the fifth network function node to the fourth network function node, so that the fourth network function node can update the PCC rule of at least one of the associated UL flow or the DL flow according to the monitoring report. For example, the fourth network function node receives a QoS monitoring report of the UL flow and updates the PCC rule of at least one of the associated UL flow or the DL flow. Or, the fourth network function node receives a QoS monitoring report of the DL flow and updates the PCC rule of at least one of the associated UL flow or the DL flow.

In some embodiments, the method further includes:

receiving indication information sent by a sixth network function node based on the monitoring report, in which the indication information is used to indicate whether to update the PCC rule of the associated UL flow and/or the associated DL flow.

The sixth network function node may be an AF in a mobile communication network, and the fourth network function node may directly communicate with the AF. If the AF is located outside the mobile communication network, the sixth network function node may communicate with the AF through a NEF.

The indication information may directly indicate whether the PCF updates the PCC rule of the associated UL flow and/or the associated DL flow, so that the fourth network function node updates the PCC rule of the associated UL flow and/or the associated DL flow when the indication information indicates "updating", or may not update the PCC rule of the associated UL flow and/or the associated DL flow when the indication information indicates "not updating".

In an embodiment, the indication information may include at least one of the following:
an update indication, which indicates whether to update a PCC rule;
a flow ID or a flow direction, which indicates to update a PCC rule of at least one of an UL flow or a DL flow; or
an update amount, which indicates a latency-associated parameter in the PCC rule. For example, the latency-associated parameter may include: a PDB, a PSDB and/or a 5QI.

For example, regardless of whether the fourth network device receives the monitoring report, it is able to directly update the PCC rule of the associated UL flow and/or the associated DL flow according to the indication information.

In another embodiment, the indication information may include an update indication, which indicates to update a PCC rule. Whether to update the PCC rule of the UL flow or the PCC rule of the DL flow is determined by the PCF according to the monitoring report.

For example, the indication information is generated by the sixth network function node based on the monitoring report sent by the fourth network function node, or the indication information is generated by the sixth network function node based on the monitoring report received from the first network function node.

For example, the UPF may directly send the monitoring report to the AF corresponding to the sixth network function node, and the monitoring report does not need to be sent to the AF through the fourth network function node corresponding to the PCF. As another example, the RAN node or the UPF sends the monitoring report to the SMF, and then the SMF sends it to the fourth network function node corresponding to the PCF for the fourth network function node to forward it to the AF.

That is, the monitoring report may be sent to the AF corresponding to the sixth network function node through a data plane or a control plane, respectively.

In some embodiments, updating the PCC rule of at least one of the associated UL flow or the DL flow based on the monitoring report, includes at least one of the following:
updating a PDB or a PSDB of the UL flow based on the monitoring report;
updating a PDB or a PSDB of the DL flow based on the monitoring report;
updating a QoS parameter of the UL flow based on the monitoring report; or
updating a QoS parameter of the DL flow based on the monitoring report.

For example, according to the RT latency corresponding to the UL flow and the DL flow associated with the UL flow, an authorized delay of at least one of the UL flow or the DL flow is updated, and a sum of latencies of the UL flow and the DL flow before or after the update is less than or equal to the RT latency.

The authorized delay of at least one of the UL flow or the DL flow is updated by a PDB, a PSDB or a QoS parameter.

Updating the QoS parameter of at least one of the UL flow or the DL flow may include updating a QoS ID of the UL flow. The QoS ID is used to identify a set of QoS parameters. The QoS parameter may include a 5QI.

In some embodiments, sending the association ID by the fifth network function node, includes:
sending a PCC rule containing the association ID to the fifth network function node;
   or,
sending a PCC rule and the association ID to the fifth network function node.

That is, the current PCC rule and the association ID may be included in a new message and sent to the fifth network function node, or the association ID may be sent to the fifth network function node as a content included in the PCC rule, i.e., the PCC rule includes the association ID within itself. If the association ID is not included in the PCC rule, the association ID and the PCC rule may be included in the same message and sent to the fifth network function node, so that the fifth network function node knows the association relationship between the association ID and the PCC rule.

For example, when the fifth network function node is an SMF, the SMF may receive a message containing both the association ID and the PCC rule. After receiving the PCC rule, the SMF converts the PCC rule into an N4 rule and sends the N4 rule and the association ID to the UPF, and the UPF converts the N4 rule and the association ID into an authorized latency and sends the authorized latency to the RAN node.

In other embodiments, the method may include that the fourth network function node sends the association ID directly to the fifth network function node, and the fifth network function node sends the association ID to the first network function node.

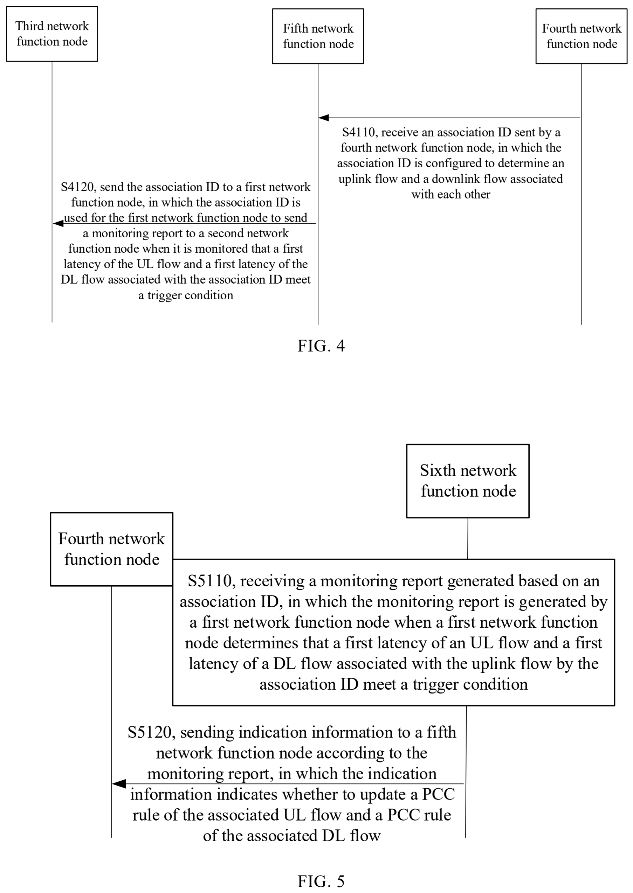

As illustrated in FIG. 4, the embodiment of the invention provides a method for processing information. The method is performed by a fifth network function node, and includes the following steps.

S4110: receiving an association ID sent by a fourth network function node, in which the association ID is configured to determine an uplink flow and a downlink flow associated with each other.

S4120: sending the association ID to a first network function node, in which the association ID is used for the first network function node to send a monitoring report to a second network function node when it is monitored that a first latency of the UL flow and a first latency of the DL flow associated with the association ID meet a trigger condition.

The fifth network function node may be a core network function node, such as an SMF.

The fourth network function node can be a core network function node, such as a PCF.

The association ID is capable of associating an UL flow and a DL flow of the same/common RT latency. Or, the association ID is used to associate any UL flow and DL flow belonging to the same RT data traffic. In this case, after receiving the association ID, the first network function node is able to determine the associated UL flow and DL flow according to the association ID. That is, the association ID may also be used for the first network function node to determine the UL flow and the DL flow that are in an association relationship. This association relationship may include sharing a common RT latency.

For example, the association ID includes, but is not limited to, at least one of the following:
a peer ID, which is used to identify an UL flow and a DL flow of a common RT latency;
a RT group ID, which is used to identify a RT group, and the RT group may include one or more UL flows and one or more DL flows; or
a peer indication, including flow description(s), which may be used to identify the UL flow and the DL flow of the common RT latency.

In an embodiment, the association ID may also associate PCC rules and/or QoS IDs of an UL flow and/or its associated DL flow. The QoS ID at least includes a 5QI.

For example, the association ID may be used to associate the PCC rule of the UL flow with the PCC rule of the associated DL flow. As another example, the association ID may be used to associate the 5QI of the UL flow with the 5QI of the associated DL flow.

There are various ways to associate the association ID with flow IDs of the UL flow and the DL flow, including but not limited to: storing the association ID and the flow ID of the UL flow correspondingly or transmitting them together; storing the association ID and the flow ID of the DL flow correspondingly or transmitting them together; or storing the association ID, the flow ID of the UL flow and the flow ID of the DL flow correspondingly or transmitting them together.

As illustrated in FIG. 5, the embodiment of the invention provides a method for processing information. The method is performed by a sixth network function node, and includes the following steps.

S5110: receiving a monitoring report generated based on an association ID, in which the monitoring report is generated by a first network function node when a first network function node determines that a first latency of an UL flow and a first latency of a DL flow associated with the uplink flow by the association ID meet a trigger condition.

S5120: sending indication information to a fifth network function node according to the monitoring report, in which the indication information indicates whether to update a PCC rule of the associated UL flow and a PCC rule of the associated DL flow.

If the sixth network function node is an AF in a mobile communication network, it may directly receive the monitoring report sent by the PCF or the first network function node without having to use the NEF. If the AF is outside the mobile communication network, the AF may receive the monitoring report sent by the first network function node or the fourth network function node through the NEF.

After receiving the monitoring report, the sixth network function node sends the indication information to core network function nodes, such as the PCF corresponding to the fourth network function node. The indication information is used to trigger the PCF to update a PCC rule.

For example, receiving the monitoring report generated based on the association ID includes: receiving the monitoring report sent by the first network function node; or, receiving the monitoring report sent by the fifth network function node.

XRM services require a 5GS to comprehensively consider the QoS characteristics of relevant service flows, for example, whether parameters of a flow, such as a delay critical GBR, a GFBR, a PDB and a MDBV, can all be met and coordinated at the same time. It involves multiple XRM flows of a UE and XRM flows of multiple UEs, and the consistency of QoS authorization and execution between them is guaranteed. UL-DL transmission coordination to meet RT latency requirements is an issue to be solved.

In related arts, the AF may provide a PDB as a latency requirement when requesting a QoS, or provide an RT requirement indication as an indication of whether two-way latency needs to be considered as a reference for network authorization.

However, a delay status in actual services is dynamically and continuously changing due to various factors in the network. Therefore, a real-time/quasi-real-time delay status of the network and a real-time latency requirement of an AF service may directly affect QoS authorization of each flow, so as to affect whether a function support of 5GS XRM servi ces can be successful.

In view of this, the embodiment of the invention adds an RT association ID (peer ID/RT group ID/peer indication) to UL and DL flows of XRM services.

The association ID is used to associate UL and DL SDFs, QoS flows, PCC rules, 5QI PDBs or PSDBs of the RT.

When the PCF sends a PCC rule to the SMF, it also sends the RT association ID.

The SMF sends the association ID to the RAN and the UPF.

The PCF splits the RT latency into an UL PDB and a DL PDB, and generates two PCC rules corresponding to the UL and DL SDFs.

The corresponding PDBs are considered to assign corresponding 5QIs to the two rules. The two PCC rules are associated with a QoS monitoring policy, respectively. The policy is to monitor an UL latency and a DL latency respectively.

When the PCF sends the PCC rule to the SMF, it also sends the RT association ID of the RT, such as UL and DL SDFs, QoS flows, PCC rules and 5QI PDBs or PSDBs, the SMF sends the association ID to the RAN and the UPF.

The RAN and the UPF associate UL and DL SDFs/QoS flows/5QIs (PDBs) based on the association ID, initiate a session modification (e.g., triggered when executing QoS monitoring), to realize UL and DL latency tradeoff.

In an embodiment, when it is monitored that an actual latency of an UL SDF/QoS flow/5QI is greater than a PDB authorized by the PCF, and an actual latency of a DL SDF/QoS flow/5QI corresponding to the association ID is less than a PDB authorized by the PCF, the RAN sends a UL QoS monitoring report to the UPF/PCF, triggering an update of an UL PCC rule and/or a DL PCC rule.

For example, the PCF authorizes at least one of a new UL PDB or a new DL PDB for updating the PDB(s) corresponding to the PCC rule(s), which may be 5QI PDB(s) or vice versa.

In another embodiment, when it is monitored that an actual latency of UL SDF/QoS flow/5QI is greater than a PDB authorized by the PCF, and an actual latency of DL SDF/QoS flow/5QI corresponding to the association ID is less than a PDB authorized by the PCF, the UPF sends an UL QoS monitoring report to the PCF or the AF, triggering an update of an UL PCC rule and/or a DL PCC rule.

For example, the PCF may authorize at least one of a new UL PDB or a new DL PDB for updating the PDB(s) corresponding to the PCC rule(s), which may be 5QI PDB(s) or vice versa.

In some embodiments, the PCF may directly initiate a rule update, or indirectly initiate the rule update by sending a QoS monitoring report to the AF to trigger session modification.

Optionally, the PCF carries the association ID in or with the PCC rule.

Parameters, such as an RT indication, a peer ID, an RT group ID and a peer indication, may be added in the PCC rule or implicitly carried by existing parameters. The peer indication may include: a SDF template and/or a 5QI.

Based on the RT latency requirements, the PCF splits the RT latency into an UL PDB and a DL PDB. The UL PDB and the DL PDB may be equal or unequal, but a sum of the UL PDB and the DL PDB cannot exceed the RT latency.

It is decided to generate the association ID. The association ID is associated with UL SDF, QoS flow, PCC rule, 5QI PDB or PSDB, and DL SDF, QoS flow, PCC rule, 5QI PDB or PSDB.

Based on the QoS monitoring report, the PCF may adjust the UL PDB and the DL PDB.

For example, the PCF may receive an UL QoS monitoring report, and adjust a DL PCC rule and/or an UL PCC rule according to the QoS monitoring report. The UL QoS monitoring report may include a peer ID, an RT group ID or a peer indication, so that the PCF may determine the associated UL PCC rule and DL PCC rule according to the peer ID, the RT group ID or the peer indication.

That is, the PCF may adjust the UL PCC rule and/or the DL PCC rule based on the QoS monitoring report, e.g., the UL PDB and/or the DL PDB, or, the UL 5QI and/or the DL 5QI in the PCC rules.

For example, when the UL QoS monitoring report is received, the PCF may find the DL PCC rule based on the association ID, and adjust the UL and DL PCC rules together. The PCF may generate the association ID based on an RT latency requirement indication, and/or XRM service contract information, and/or an operator policy.

For example, according to a requirement indication, a service contract or an operator strategy supporting RT latency requirements or 5QI update, the association ID is generated. The association ID is used to identify UL and DL SDFs, QoS flows, PCC rules, and 5QI PDBs or PSDBs.

The PCF adjusts UL and/or DL PCC rules based on the QoS monitoring report, or directly triggers the update of PCC rules, or sends the QoS monitoring report to the AF for the AF to trigger PCC rule update.

Optionally, the PCF directly or indirectly triggers the PCC rule update, including updating corresponding PDBs and allocating corresponding 5QIs to the updated PDBs.

The AF provides two-way latency requirement information to the PCF.

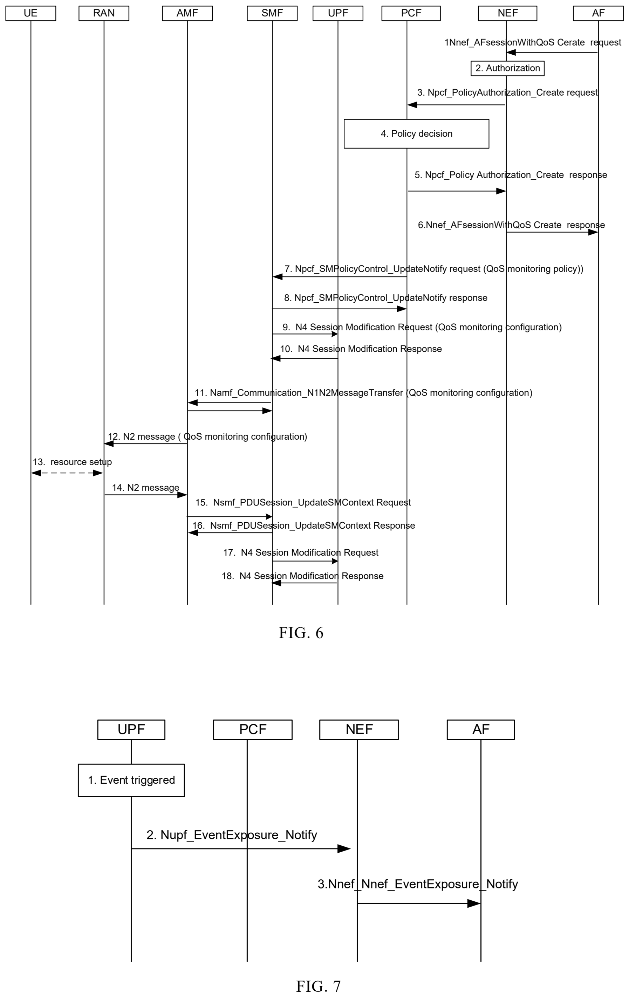

For example, as illustrated in FIG. 6, the AF provides the requirement information to the PCF through the following process:
1) the AF provides the RT latency requirement to the PCF during AF session with required QoS procedure. For example, when the PCF requests the QoS requirements from the AF, the AF provides the RT latency requirement to the PCF. The RT latency requirement may be used for the PCF to determine the RT latency; 2) AF session with required QoS update procedure; or
3) service specific parameter provisioning; or
4) setting a policy for a future AF session.

The AF provides the enhanced two-way latency requirement information to the PCF in a direct or indirect manner. The indirect manner includes:
1) sending the information to the PCF through the NEF;
2) sending the information to the PCF through a TSCTSF; and
3) sending the information to the PCF through the TSCTSF and the NEF.

1. The AF sends an AF session resource request, for example, through Nnef_AFsessionWithQoS_Create request, to create an AF request. The AF carries an RT latency (or two-way delay budget) of relevant media flows of XRM services in the request message, including UL and DL RT latencies or PDBs;

Optionally, the request carries XRM service information, which is used to identify the XRM services.

Common ID information. For example, the common ID information may include: a UE address, a UE ID, an AF ID, an application ID, flow description(s), a data network name (DNN), a single network slice selection assistance information (S-NSSAI), QoS parameters and other corresponding information. The common ID information may be used to identify all flows in XRM service groups.

2. The NEF authorizes the AF request. If it turns out to be an untrusted AF, the NEF sends the AF request to the PCF.

Optionally, the NEF performs relevant mapping, including mapping IDXRM service (AF - Service-ID) to the DNN and S-NSSAI, mapping external application ID to CN application ID, mapping external UE ID to UE ID in CN (such as SUPI) based on UDM contract information, and mapping external XRM service group ID to internal XRM service group ID according to the UDM contract information.

3. The NEF authorizes the AF request and determines whether to call the TSCTSF or directly connect with (contact) the PCF according to the parameters provided by the AF.

The NEF authorizes the AF request and determines whether to invoke the TSCTSF or to directly contact the PCF depending on the parameters provided by the AF. The PCF receives the AF provided attributes from the NEF or from the TSCTSF. The NEF triggers an Npcf_PolicyAuthorization_Create request, and sends the AF request to the PCF, which carries the RT latency requirement information for the PCF to make a policy decision. The message carries XRM service related information in the AF request.

4. The PCF makes a policy decision, and determines updated or new policy information need to be sent to the SMF and then sends the updated or new policy information to the SMF.

The PCF decides to generate an RT association ID, including an RT indication, a peer ID, an RT group ID, a peer indication and other parameters.

The association ID is used to associate UL and DL SDFs, QoS flows, PCC rules and 5QI PDBs or PSDBs of the RT.

When the PCF sends the PCC rule(s) to the SMF, it also sends the RT association ID to the SMF, and the SMF sends the association ID to the UPF.

The PCF splits the RT latency into an UL PDB and a DL PDB, and generates two PCC rules corresponding to UL and DL SDFs. The corresponding PDBs are considered to allocate corresponding 5QIs for the two rules. The two PCC rules are associated with QoS monitoring policies, respectively, to monitor UL and DL latencies.

When the PCF sends the PCC rule(s) to the SMF, it also sends UL and DL SDFs, QoS rules, PCC rules and 5QI (PDBs) associated with the RT association ID. The SMF sends the association ID to the RAN and the UPF.

The RAN and the UPF associate UL and DL SDFs, QoS flows and 5QI (PDBs) based on the association ID to initiate the session modification, to realize UL and DL latency tradeoff. For example, the session modification may be triggered when QoS monitoring is performed, and modification of the authorized latency of at least one of the UL flow or the DL flow is triggered by sending the monitoring report, to realize UL and DL latency tradeoff.

For example, if it is monitored that an actual latency of UL SDF/QoS flow/5QI is greater than a PDB authorized by the PCF, and an actual latency of DL SDF/QoS flow/5QI corresponding to the association ID is less than a PDB authorized by the PCF, the RAN sends a UL QoS monitoring report to the UPF or the PCF, triggering an update of UL and/or DL PCC rule. Optionally, the PCF may authorize at least one of a new UL PDB or a new DL PDB for updating the PDB(s) corresponding to the PCC rule(s), which may be 5QI PDB(s) or vice versa.

As another example, when it is monitored that an actual latency of UL SDF/QoS flow/5QI is greater than a PDB authorized by the PCF, and an actual latency of DL SDF/QoS flow/5QI corresponding to the association ID is less than a PDB authorized by the PCF, the UPF sends an UL QoS monitoring report to the PCF or the AF, triggering an update of an UL PCC rule and/or a DL PCC rule. Optionally, the PCF may authorize at least one of a new UL PDB or a new DL PDB for updating the PDB(s) corresponding to the PCC rule(s), which may be 5QI PDB(s) or vice versa.

The PCF may directly initiate a rule update, or indirectly initiate the rule update by sending a QoS monitoring report to the AF to trigger session modification.

Optionally, the PCF carries the association ID in or with the PCC rule.

Parameters, such as an RT indication, a peer ID, an RT group ID and a peer indication, may be added in the PCC rule or implicitly carried by existing parameters. The peer indication may include: a SDF template and/or a 5QI.

Based on the RT latency requirements, the PCF splits the RT latency into an UL PDB and a DL PDB. The UL PDB and the DL PDB may be equal or unequal, but a sum of the UL PDB and the DL PDB is less than or equal to the RT latency. The UL PDB may be an authorized latency of the UL flow, and the DL PDB is an authorized latency of the DL flow.

The PCF decides to generate the association ID. The association ID is associated with UL SDF, QoS flow, PCC rule, 5QI PDB, and DL SDF, QoS flow, PCC rule, 5QI PDB.

The PCF may adjust at least one of an UL PCC rule or a DL PCC rule based on a QoS monitoring report. For example, when the PCF receives the UL QoS monitoring report, it is able to find the DL PCC rule based on the association ID, and adjust the UL and DL PCC rules together, e.g., the UL PDB and/or the DL PDB, or, the UL 5QI and/or the DL 5QI in the PCC rules.

The PCF decides to generate the association ID based on an RT latency requirement indication, and/or XRM service contract information, and/or an operator strategy. For example, according to a requirement indication, a service contract or an operator strategy supporting RT latency requirements or 5QI update, the association ID is generated. The association ID is used to identify UL and DL SDFs, QoS flows, PCC rules, and 5QI PDBs.

The PCF adjusts UL and/or DL PCC rules (e.g., UL PDB and/or DL PDB, UL 5QI and/or DL 5QI) based on the QoS monitoring report. The PCF may directly trigger a PCC rule update, or send the QoS monitoring report to the AF for the AF to trigger the PCC rule update.

Optionally, the PCF may directly or indirectly triggers the PCC rule update, including updating a corresponding PDB and allocating a corresponding 5QI to the updated PDB.

5. The PCF responds to the NEF an Npcf_Policy Authorization_Create response.

6. The NEF sends a Nnef_AFsessionWithQoS_Create response message to the AF. The message carries a result to inform the AF whether the request is authorized.

7. The PCF initiates a session management (SM) policy association modification request (PCC rule (QoS monitoring policy)) to the SMF.

Based on the QoS monitoring policy for measurement from the PCF, the SMF generates a QoS monitoring configuration and sends it to the UPF or the RAN.

The PCF carries the association ID in or with the PCC rule to the SMF.

Addition is made to the PCC rule.

Parameters, such as an RT indication, a peer ID, an RT group ID and a peer indication, may be added in the PCC rule or implicitly carried by existing parameters. The peer indication may include: a SDF template and/or a 5QI.

The SMF sends the association ID to the RAN and the UPF. The RAN and the UPF associate UL and DL SDFs/QoS flows/5QI(PDBs) based on the association ID, and initiate the session modification, for example, triggering session modification when QoS monitoring is performed, so as to realize UL and DL latency tradeoff.

8. The SMF replies a SM policy association modification response to the PCF.

9. The SMF initiates a N4 session modification request (the QoS monitoring configuration) to the UPF. The QoS monitoring configuration may be used to monitor latencies of UL flow and DL flow and create a monitoring report.

If it is monitored that an actual latency of UL SDF/QoS flow/5QI is greater than a PDB authorized by the PCF, and an actual latency of DL SDF/QoS flow/5QI corresponding to the association ID is less than a PDB authorized by the PCF, the UPF sends a UL QoS monitoring report to the PCF or the AF, triggering an update of UL and/or DL PCC rule. Optionally, the PCF may authorize at least one of a new UL PDB or a new DL PDB for updating the PDB(s) corresponding to the PCC rule(s), which may be 5QI PDB(s) or vice versa.

10. Upon reception of the QoS monitoring configuration, the UPF enables the measurement and report. The UPF responds to the SMF.

11. For SMF requested modification, the SMF invokes a transfer of Namf_Communication_N1N2 message ([N2 SM information] (PDU Session ID, QFI(s), QoS Profile(s), QoS Monitoring configuration), N1 SM container)). The QFI(s) may be QoS flow representation, i.e., QoS flow ID in English.

12. The AMF sends a non-access stratum (NAS) message to the RAN node. The message may include the N2 SM information received from the SMF and the N1 SM container (for example, a PDU session modification command).

Once the RAN node receives the QoS monitoring configuration, the RAN may enable measuring and reporting events, for example, detecting or monitoring the UL latency and the DL latency, and regard the RT latency as a sum of the UL authorized latency and the DL authorized latency.

If it is monitored that an actual latency of UL SDF/QoS flow/5QI is greater than a PDB authorized by the PCF, and an actual latency of DL SDF/QoS flow/5QI corresponding to the association ID is less than a PDB authorized by the PCF, the RAN sends a UL QoS monitoring report to the UPF or the PCF, triggering an update of UL and/or DL PCC rule. Optionally, the PCF may authorize at least one of a new UL PDB or a new DL PDB for updating the PDB(s) corresponding to the PCC rule(s), which may be 5QI PDB(s) or vice versa.

14. The (R)AN acknowledges a N2 PDU session request by sending an N2 PDU session acknowledgement message to the AMF.

15. The AMF forwards the N2 SM information received from the (R)AN to the SMF through a Nsmf_PDUSession_UpdateSMContex service operation.

16. The SMF response with a Nsmf_PDUSession_UpdateSMContext.

17-18. The SMF updates a N4 session of UPF(s) involved in PDU session modification by sending an N4 session modification request message to the UPF. A personal computer may receive the QoS monitoring report latter.

The PCF may directly or indirectly notify the AF of the QoS monitoring report for the AF to trigger a PCC rule update, to trigger a session update or to release a process;
or,
the PCF may adjust at least one of an UL PCC rule or a DL PCC rule based on the QoS monitoring report and the association ID, for example, directly triggering a PCC rule update.

Optionally, the PCF directly or indirectly triggers the PCC rule update, including updating a corresponding PDB and allocating a corresponding 5QI to the updated PDB.

That is, the PCF may adjust at least one of an UL PCC rule or a DL PCC rule (e.g., UL PDB and/or DL PDB, or UL 5QI and/or DL 5QI) based on the QoS monitoring report and the association ID. For example, the PCF may find the DL PCC rule based on the association ID after receiving the UL QoS monitoring report, and adjust the UL and DL PCC rules together (e.g., ULPDB and/or ORDLPDB, and UL 5QI and/or DL 5QI).

As illustrated in FIG. 7, the method for processing information includes the following steps.
1. When the event detected/reached, the report will be triggered (e.g. achieved the threshold, or the period timer overtime), the UPF triggers the Nupf_EventExposure_Notify message to report the measured information, according to the subscription.

The detected event may include events such as a latency exceeding a threshold or an event of expiry.

2. The UPF Sends a Nupf_EventExposure_Notify message (measured two-way delay budget status information) to the NEF. The UPF reports the monitoring report to the AF directly or through the NEF, or the UPF sends the QoS monitoring report to the PCF through the SMF to trigger a rule update. The PCF reports to the AF to trigger an update or the PCF triggers a local update.

3. The NEF sends a Nnef_Nnef_EventExposure_Notify message (the measured two-way delay budget status information) to the AF.

In conclusion, RT association IDs are added for UL and DL XRM services, including at least one of a peer ID, a RT group ID or a peer indication. The association ID is used to associate the RT and UL and DL SDFs, QoS flows, PCC rules or 5QI PDBs. When the PCF sends the PCC rules to the SMF, it also sends the RT association ID. The SMF sends the association ID to the RAN and the UPF.

The PCF splits the RT latency into an UL PDB and a DL PDB, and generates two PCC rules corresponding to UL and DL SDFs. By taking into consideration of the corresponding PDBs, corresponding 5QIs are allocated to the two rules. The two PCC rules are associated with QoS monitoring policies, respectively, to monitor UL and DL latencies.

When the PCF sends the PCC rules to the SMF, it also sends RT association IDs associated with UL and DL SDFs, QoS flows, PCC rules, 5QI PDBs or PSDBs of the RT. The SMF sends the association ID to the RAN and the UPF.

Based on the association ID, the RAN and the UPF associate UL and DL SDFs, QoS flows or 5QI PDBs, initiate a session modification (triggered during QoS monitoring), to realize a tradeoff of UL and DL latencies. For example, if it is monitored that an actual latency of an UL SDF/QoS flow/5QI is greater than an authorized PDB of the PCF, and an actual latency of a DL SDF/QoS flow/5QI corresponding to the association ID is less than an authorized PDB of the PCF, the RAN sends a UL QoS monitoring report to the UPF or the PCF, triggering at least one of an UL PCC rule update or a DL PCC rule update. Optionally, the PCF authorizes a new UL/DL PDB, and updates a PCC rule corresponding to the PDB (a new 5QI corresponding to the PDB) or vice versa.

If it is monitored that an actual latency of an UL SDF/QoS flow/5QI is greater than an authorized PDB of the PCF, and an actual latency of a DL SDF/QoS flow/5QI corresponding to the association ID is less than an authorized PDB of the PCF, the UPF sends an UL QoS monitoring report to the PCF or the AF, triggering at least one of an UL PCC rule update or a DL PCC rule update. Optionally, the PCF authorizes a new UL/DL PDB, and changes a PCC rule corresponding to the PDB (a new 5QI corresponding to the PDB) or vice versa.

The PCF may directly initiate a rule update, or indirectly initiate the rule update by sending a QoS monitoring report to the AF.

Optionally, the PCF carries the association ID inside or with the PCC rule. Parameters such as an RT indication, a peer ID, an RT group ID and a peer indication are added in the PCC rule, or implicitly carried in the existing parameters. The peer indication may include: a SDF template and/or a 5GI.

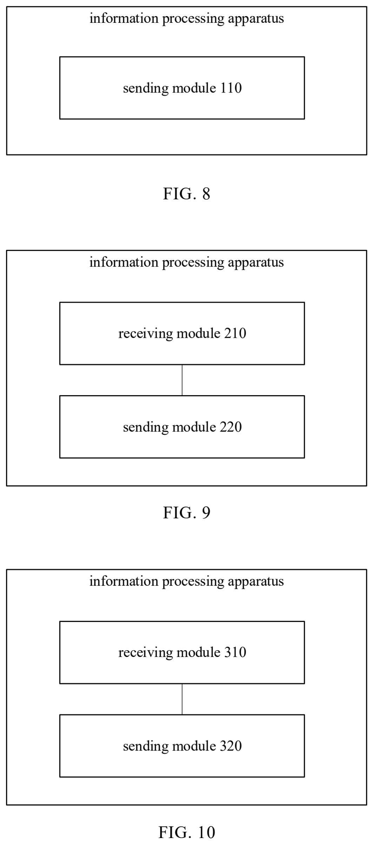

As illustrated in FIG. 8, the embodiment of the invention provides an apparatus for information processing. The apparatus includes:
a sending module 110, configured to send an association ID to a fifth network function node, in which the association ID is configured to determine an uplink flow and a downlink flow associated with each other;
in which after the fifth network function node sends the association ID to a first network function node, the association ID is used for the first network function node to send a monitoring report to a second network function node when it is monitored that a first latency of the UL flow and a first latency of the DL flow associated with the uplink flow meet a trigger condition.

The apparatus for information processing may be the first network function node. The apparatus for information processing may further include a storage module for storing an association ID.

It is understood that when the first latency of the UL flow and the first latency of the DL flow associated with the UL flow meet the trigger condition, sending the monitoring report to a third network function node, includes:
when it is monitored that the first latency of the UL flow is greater than a second latency of the UL flow and the first latency of the DL flow associated with the UL flow is less than a second latency of the DL flow, sending a monitoring report of the uplink flow to the third network function node;
   or,
when it is monitored that the first latency of the DL flow is greater than the second latency of the DL flow and the first latency of the UL flow associated with the DL flow is less than the second latency of the UL flow, sending a monitoring report of the DL flow to the third network function node;
in which the second latency of the UL flow is a latency authorized by a current PCC rule of the UL flow; and
the second latency of the DL flow is a latency authorized by a current PCC rule of the DL flow. It is understood that the monitoring report is used to update associated at least one of an UL PCC rule or a DL PCC rule.

It is understood that the first network function node is an RAN node, and the third network function node is a UPF or a PCF;
or,
the first network function node is a UPF, and the third network function node is a PCF or an AF;
   and/or
the first network function node is an RAN node, and the second network function node is an SMF or a UPF;
   or,
the first network function node is a UPF, and the second network function node is an SMF.

In some embodiments, the UL flow is an UL SDF corresponding to the RT latency, and the DL flow is a DL SDF corresponding to the RT latency.

As illustrated in FIG. 9, the embodiment of the invention provides an apparatus for information processing. The apparatus includes:
a second receiving module 210, configured to receive an association ID sent by a fourth network function node, in which the association ID is configured to determine an uplink flow and a downlink flow associated with each other; and
a third sending module 220, configured to send the association ID to a first network function node, in which the association ID is used for the first network function node to send a monitoring report to a second network function node when it is monitored that a first latency of the UL flow associated with the association ID and a first latency of the DL flow associated with the association ID meet a trigger condition.

The apparatus for information processing may be the fourth network function node.

It is understood that the fourth network function node is a PCF; and/or the fifth network function node is a SMF; and/or the first network function node is an RAN node; and/or the first network function node is a UPF.

It is understood that the second receiving module 210 is configured to receive the monitoring report.

The apparatus further includes: a processing module, configured to: update at least one of an associated UL PCC rule or a DL PCC rule based on the monitoring report; and send the updated PCC rule to the fifth network function node.

It is understood that the receiving module 210 is further configured to: receive indication information sent by the sixth network function node based on the monitoring report, in which the indication information is used to indicate whether to update at least one of an associated UL PCC rule or a DL PCC rule.

It is understood that the indication information is generated by the sixth network function node based on the monitoring report sent by the fourth network function node, or the indication information is generated by the sixth network function node based on the monitoring report received from the first network function node.

It is understood that the processing module is configured to execute at least one of the following:
updating a PDB or a PSDB of the UL flow based on the monitoring report;
updating a PDB or a PSDB of the DL flow based on the monitoring report;
updating a QoS parameter of the UL flow based on the monitoring report; or
updating a QoS parameter of the DL flow based on the monitoring report.

It is understood that the sending module 220 is further configured to: send a PCC rule containing the association ID to the fifth network function node; or, send the PCC rule and the association ID to the fifth network function node.

As illustrated in FIG. 10, the embodiment of the invention provides an apparatus for information processing. The apparatus includes:
a third receiving module 310, configured to receive a monitoring report generated based on an association ID, in which the monitoring report is generated by a first network function node when a first latency of an uplink flow and a first latency of a downlink flow associated with the uplink flow by the association ID meet a trigger condition; and
a fourth sending module 320, configured to send indication information to a fifth network function node according to the monitoring report, in which the indication information indicates whether to update a PCC rule of the UL flow and a PCC rule of the DL flow.

The information processing device may be a sixth network function node.

It is understood that the receiving module 310 is configured to: receive the monitoring report sent by the first network function node; or, receive the monitoring report sent by the fourth network function node.

The embodiment of the invention provides a communication system, including a first network function node, a second network function node, a third network function node, a fourth network function node, a fifth network function node and a sixth network function node;

The first network function node is used to realize any of the above technical solutions performed by the first network function node.

The fourth network function node is used to realize the technical solution performed by the fourth network function node.

The fifth network function node is used to realize the technical solution performed by the fifth network function node.

The sixth network function node is used to realize the technical solution performed by the sixth network function node.

It is worth noting that the first network function node may be an RAN node or a UPF.

If the first network function node is an RAN node, the second network function node may be a fifth network function node or a UPF; and/or
if the first network function node is a UPF, the second network function node may be the fifth network function node. Or, the third network function node may be the fifth network function node, the fourth network function node or the sixth network function node.

The fifth network function node and the third network function node may be SMFs.

The fourth network function node may be a PCF.

The sixth network function node may be an AF.

An embodiment of the invention provides a communication device, including:
a memory for storing processor-executable instructions; and
a processor connected to the memory;
in which the processor is configured to perform the method for processing information provided by any of the foregoing technical solutions.

The processor includes various types of storage mediums, which are non-transitory computer storage mediums and are used to continue to remember information stored on the communication device after a power failure.

The communication device includes a UE or a network function node.

The processor may be connected to the memory through a bus or the like for reading the executable program stored on the memory, for example, at least one of the methods shown in FIGS. 2A-2C, FIGS. 3A-3B, and FIGS. 4-7.

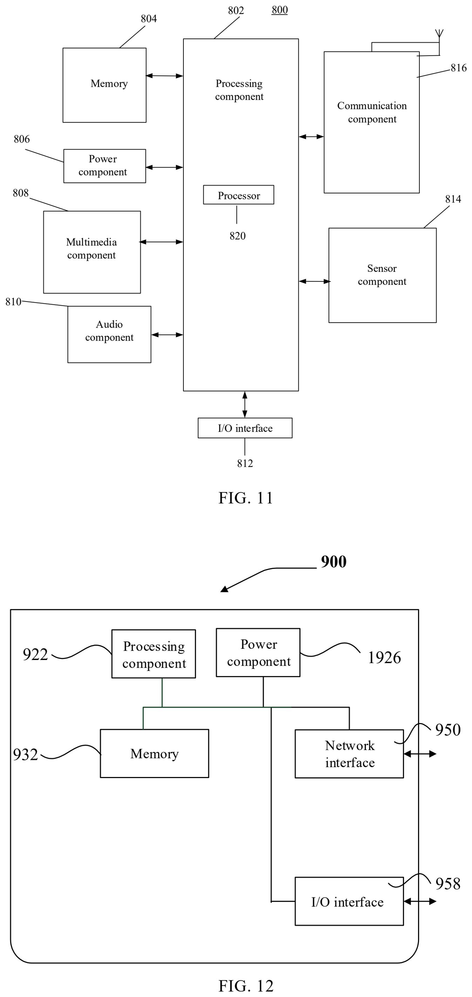

FIG. 11 is a block diagram of a UE 800 according to an example embodiment. For example, the UE 800 may be a mobile phone, a computer, a digital broadcasting UE, a message transceiver device, a game console, a tablet device, a medical device, a fitness device or a personal digital assistant.

As illustrated in FIG. 11, the UE 800 includes one or more of the following components: a processing component 802, a memory 804, a power component 806, a multimedia component 808, an audio component 810, an input/output (I/O) interface 812, a sensor component 814 and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an example embodiment, the communication component 816 receives a broadcast signal or broadcast associated information from an external broadcast management system via a broadcast channel. In an example embodiment, the communication component 816 further includes a Near Field Communication (NFC) module to facilitate short-range communication. For example, the NFC module may be implemented based on a Radio Frequency (RF) ID (RFID) technology, an Infrared Data Association (IrDA) technology, an Ultra-Wide Band (UWB) technology, a Blue Tooth (BT) technology, and other technologies.

In some exemplary embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In some example embodiments, there is also provided a non-transitory computer readable storage medium including instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc and an optical data storage device.

FIG. 12 is a structural schematic diagram of a network function node according to an example embodiment of the invention. As illustrated in FIG. 12, the network function node 900 includes a processing component 922 consisting of one or more processors, and memory resources represented by a memory 932 for storing instructions executable by the processing component 922, such as applications. The application programs stored in the memory 932 may include one or more modules each corresponding to a set of instructions. In addition, the processing component 922 is configured to execute the instructions to perform any of the methods described above that are applicable to the access network function node, for example, any of the methods illustrated in FIG. 2A-FIG. 2C, FIG. 3A-FIG. 3B and FIG. 4-FIG. 7.

The network function node 900 may also include a power component 1926 configured to perform power management of the network function node 900, a wired or wireless network interface 950 configured to connect the network function node 900 to a network, and an I/O interface 958. The network function node 900 may operate based on an operating system stored in the memory 932, such as Windows Server TM, Mac OS XTM, UnixTM, LinuxTM, FreeBSDTM, or the like.

Other embodiments of the invention will be apparent to those skilled in the art from consideration of the specification and practice of the invention disclosed here. This application is intended to cover any variations, uses, or adaptations of the invention following the general principles thereof and including such departures from the invention as come within known or customary practice in the art. It is intended that the specification and embodiments be considered as illustrative only, with a true scope and spirit of the embodiments of the invention being indicated by the following claims.

It will be appreciated that the invention is not limited to the exact construction that has been described above and illustrated in the accompanying drawings, and that various modifications and changes can be made without departing from the scope thereof. It is intended that the scope of the invention only be limited by the attached claims.

## Claims

1. A method for processing information, performed by a first network function node, comprising:
receiving an association identifier (ID) sent by a second network function node, wherein the association ID is configured to determine an uplink flow and a downlink flow associated with each other; and
when a first latency of the uplink flow and a first latency of the downlink flow associated with the uplink flow meet a trigger condition, sending a monitoring report to a third network function node.

2. The method of claim 1, wherein when the first latency of the uplink flow and the first latency of the downlink flow associated with the uplink flow meet the trigger condition, sending the monitoring report to the third network function node comprises:
when it is monitored that the first latency of the uplink flow is greater than a second latency of the uplink flow and the first latency of the downlink flow associated with the uplink flow is less than a second latency of the downlink flow, sending a monitoring report of the uplink flow to the third network function node;
or
when it is monitored that the first latency of the downlink flow is greater than a second latency of the downlink flow and the first latency of the uplink flow associated with the downlink flow is less than a second latency of the uplink flow, sending a monitoring report of the downlink flow to the third network function node;
wherein the second latency of the uplink flow is a latency authorized by a current policy charging control (PCC) rule of the uplink flow; and
the second latency of the downlink flow is a latency authorized by a current PCC rule of the downlink flow.

3. The method of claim 1 or 2, wherein the monitoring report is configured to update the PCC rule of the associated uplink flow and/or the associated downlink flow.

4. The method of any one of claims 1-3, wherein
the first network function node is a radio access network (RAN) node, and the third network function node is a user plane function (UPF) or a policy control function (PCF); or
the first network function node is a UPF, and the third network function node is a PCF or an application function (AF); and/or
the first network function node is a RAN node, and the second network function node is a session management function (SMF) or a UPF; or
the first network function node is a UPF, and the second network function node is an SMF.

5. The method of any one of claims 1-4, wherein the uplink flow is an uplink service data flow corresponding to a round trip latency, and the downlink flow is a downlink service data flow corresponding to the round trip latency.

6. A method for processing information, performed by a fourth network function node, comprising:
sending an association identifier (ID) to a fifth network function node, wherein the association ID is configured to determine an uplink flow and a downlink flow associated with each other;
wherein after the fifth network function node sends the association ID to a first network function node, the association ID is used for the first network function node to send a monitoring report to a second network function node when a first latency of the uplink flow and a first latency of the downlink flow associated with the uplink flow meet a trigger condition.

7. The method of claim 6, wherein
the fourth network function node is a policy control function (PCF);
and/or
the fifth network function node is a session management function (SMF);
and/or
the first network function node is a radio access network (RAN) node;
and/or
the first network function node is a user plane function (UPF).

8. The method of claim 6 or 7, further comprising:
receiving the monitoring report;
updating a policy charging control (PCC) rule of the associated uplink flow and/or the associated downlink flow based on the monitoring report; and
sending the updated PCC rule to the fifth network function node.

9. The method of claim 8, further comprising:
receiving indication information sent by a sixth network function node based on the monitoring report, wherein the indication information is used to indicate whether to update the PCC rule of the associated uplink flow and/or the associated downlink flow.

10. The method of claim 8, wherein the indication information is generated by the sixth network function node based on a monitoring report sent by the fourth network function node, or the indication information is generated by the sixth network function node based on a monitoring report received from the first network function node.

11. The method of any one of claims 8-10, wherein updating the PCC rule of the associated uplink flow and/or the associated downlink flow based on the monitoring report comprises at least one of:
updating a packet delay budget (PDB) or a packet set delay budget (PSDB) of the uplink flow based on the monitoring report;
updating a PDB or a PSDB of the downlink flow based on the monitoring report;
updating a quality of service (QoS) parameter of the uplink flow based on the monitoring report; or
updating a QoS parameter of the downlink flow based on the monitoring report.

12. The method of any one of claims 6-11, wherein sending the association ID to the fifth network function node, comprises:
sending a PCC rule containing the association ID to the fifth network function node;
or
sending a PCC rule and the association ID to the fifth network function node.

13. A method for processing information, performed by a fifth network function node, comprising:
receiving an association identifier (ID) sent by a fourth network function node, wherein the association ID is configured to determine an uplink flow and a downlink flow associated with each other; and
sending the association ID to a first network function node, wherein the association ID is used for the first network function node to send a monitoring report to a second network function node when it is monitored that a first latency of the uplink flow associated with the association ID and a first latency of the downlink flow associated with the association ID meet a trigger condition.

14. A method for processing information, performed by a sixth network function node comprising:
receiving a monitoring report generated based on an association identifier (ID), wherein the monitoring report is generated by a first network function node when a first latency of an uplink flow and a first latency of a downlink flow associated with the uplink flow by the association ID meet a trigger condition; and
sending indication information to a fifth network function node according to the monitoring report, wherein the indication information indicates whether to update a policy charging control (PCC) rule of the associated uplink flow and a PCC rule of the associated downlink flow.

15. The method of claim 14, wherein receiving the monitoring report generated based on the association ID comprises:
receiving the monitoring report sent by the first network function node;
or
receiving the monitoring report sent by a fourth network function node.

16. An apparatus for information processing, comprising:
a receiving module, configured to receive an association identifier (ID) sent by a second network function node, wherein the association ID is configured to determine an uplink flow and a downlink flow associated with each other; and
a sending module, configured to, when a first latency of the uplink flow and a first latency of the downlink flow associated with the uplink flow meet a trigger condition, send a monitoring report to a third network function node.

17. An apparatus for information processing, comprising:
a sending module, configured to send an association identifier (ID) to a fifth network function node, wherein the association ID is configured to determine an uplink flow and a downlink flow associated with each other;
wherein after the fifth network function node sends the association ID to a first network function node, the association ID is used for the first network function node to send a monitoring report to a second network function node when a first latency of the uplink flow and a first latency of the downlink flow associated with the uplink flow meet a trigger condition.

18. An apparatus for information processing, comprising:
a receiving module, configured to receive an association identifier (ID) sent by a fourth network function node, wherein the association ID is configured to determine an uplink flow and a downlink flow associated with each other; and
a sending module, configured to send the association ID to a first network function node, wherein the association ID is used for the first network function node to send a monitoring report to a second network function node when it is monitored that a first latency of the uplink flow associated with the association ID and a first latency of the downlink flow associated with the association ID meet a trigger condition.

19. An apparatus for information processing, comprising:
a receiving module, configured to receive a monitoring report generated based on an association identifier (ID), wherein the monitoring report is generated by a first network function node when a first latency of an uplink flow and a first latency of a downlink flow associated with the uplink flow by the association ID meet a trigger condition; and
a sending module, configured to send indication information to a fifth network function node according to the monitoring report, wherein the indication information indicates whether to update a policy charging control (PCC) rule of the associated uplink flow and a PCC rule of the associated downlink flow.

20. A communication device, comprising a processor, a transceiver, a memory and an executable program stored on the memory and capable of being run by the processor, wherein the processor runs the executable program to perform the method according to any one of claims 1-5, claims 6-12, claim 13 or claims 14-15.

21. A computer storage medium having stored therein an executable program that, when executed by a processor, causes the method according to any one of claims 1-5, claims 6-12, claim 13 or claims 14-15 to be implemented.

22. A communication system, comprising a first network function node, a second network function node, a third network function node, a fourth network function node, a fifth network function node and a sixth network function node;
the first network function node is configured to implement the method according to any one of claims 1-5;
the fourth network function node is configured to implement the method according to any one of claims 6-12;
the fifth network function node is configured to implement the method of claim 13; and
the sixth network function node is configured to realize the method of claim 14 or 15.
